# EUROPÄISCHE PATENTANMELDUNG

(11) **EP 2 543 488 A1**
(43) Veröffentlichungstag der Anmeldung: **09.01.2013**
(21) Anmeldenummer: 11172891.1
(22) Anmeldetag: 06.07.2011
(51) Int. Cl.: B29C 41/18, B29C 41/46, B29K 105/04, B29K 105/00

(54) **Verfahren zur Herstellung einer Formhaut im Slush-Moulding-Verfahren unter Verwendung einer temperierbaren Galvanform**

(71) Anmelder: SMP Deutschland GmbH, 79268 Bötzingen (DE)
(72) Erfinder: März, Hermann, 93326 Abendsberg (DE); Stuber, Lothar, 93055 Regensburg (DE)
(74) Vertreter: Neunert, Peter Andreas

(57) **Zusammenfassung**

Die vorliegende Erfindung betrifft eine im Slush-Moulding-Verfahren hergestellte Formhaut 2 mit einem integralen Dichteverlauf, wobei die Formhaut 2 auf ihrer Sichtseite 7 eine geschlossene Oberfläche aufweist und die Dichte der Formhaut 2 mit wachsender Entfernung von der Sichtseite 7 zur Rückseite 8 hin nahezu linear abnimmt. Gegenstand der vorliegenden Erfindung ist auch ein Verfahren zur Herstellung einer derartigen Formhaut 2.

## Beschreibung

Die vorliegende Erfindung betrifft ein Verfahren zur Herstellung einer Formhaut im Slush-Moulding-Verfahren unter Verwendung einer temperierbaren Galvanoform mit den Merkmalen des Oberbegriffs des Anspruchs 1 sowie eine nach dem Verfahren hergestellte Formhaut mit den Merkmalen des Oberbegriffs des Anspruchs 6.

Verfahren zur Herstellung von dünnen Formhäuten, sogenannten Slush-Häuten, sind aus dem Stand der Technik bekannt. Diese Verfahren werden häufig zur Herstellung von Formteilen für den Innenausbau von Kraftfahrzeugen angewandt. Man bezeichnet das Slush-Moulding-Verfahren auch als Rotationssintern oder Rotationsgießen, wobei üblicherweise eine sogenannte Galvanoform mit einem Kunststoffpulver beaufschlagt wird. Dabei wird der Galvanoform Wärme zugeführt, so dass eine dünne Kunststoffschicht aufschmilzt und an der Formoberfläche anhaftet. Während dieses Prozesses wird die Vorrichtung um mehrere Achsen gedreht, so dass sich das Pulver an der Oberfläche der Galvanoform gleichmäßig verteilt. Durch Aufschmelzen und Gelieren des Kunststoffpulvers an der Oberfläche der Galvanoform entsteht eine entsprechend geformte Slush-Haut.

In der EP 0 907 477 B1 wird ein Verfahren zur Herstellung von Doppel-Slushhäuten beschrieben, bei dem in einer Galvanoform eine erste Schicht aus verdichtetem Material gebildet wird, die die Sichtseite des fertigen Produktes darstellt, auf der dann eine zweite Schicht aus einem schäumbaren Material aufgetragen wird. Durch erneutes Rotationssintern bildet sich somit an der bereits vorhandenen kompakten Formhaut eine Schaumschicht aus. Dabei wird in die Galvanoform zusätzlich ein sogenannter Formstempel mit einer mit der Innenkontur der Doppel-Slushhaut definierten Kontur eingefahren. Anschließend beginnt der Schäumungsprozess durch Expansion des mit Treibmitteln beaufschlagten Polymerpulvers. Das Verfahren selber ist relativ aufwändig und als Produkt entsteht eine zweischichtige Formhaut, die üblicherweise zur Herstellung von Innenverkleidungsbauteilen für Kraftfahrzeuge eingesetzt wird.

In der DE 10 2007 033 374 A1 wird ein Verfahren zur Herstellung einer elastischen Kunststoffformhaut beschrieben, bei dem ein aufschäumender Kunststoff auf eine Form aufgesprüht wird, um auf diese Weise eine elastische Formhaut auszubilden. Eine bevorzugte Ausgestaltung des Verfahrens sieht vor, vor dem Aufsprühen des aufschäumenden Kunststoffes eine zusätzliche Schicht eines kompakten Kunststoffes auf die Form aufzubringen, die sich zweckmäßigerweise durch eine höhere Verschleiß- und Reißfestigkeit auszeichnet, wodurch die Eigenschaften der Formhaut verbessert werden. Auch in diesem Falle erhält man wiederum eine zweischichtige Formhaut mit einer kompakten Schicht auf der Sichtseite der Formhaut und einer porösen Schicht auf ihrer Rückseite.

Gattungsgemäße Formhäute werden vielseitig zur Herstellung von Innenverkleidungsbauteilen von Kraftfahrzeugen, wie z. B. Instrumententafeln, Seitenverkleidungen, Türverkleidungen, Mittelkonsolen, Armlehnen etc. eingesetzt und unterliegen der aus der Automobilbranche bekannten Forderung zur ständigen Optimierung der Eigenschaften, insbesondere was Optik, Haptik und Verschleißfestigkeit angeht.

Der vorliegenden Erfindung lag somit die Aufgabe zugrunde, eine im Vergleich zum Stand der Technik verbesserte Formhaut sowie ein Verfahren zu ihrer Herstellung zur Verfügung zu stellen.

Gelöst wird die Aufgabe durch ein Verfahren mit den Merkmalen des Anspruchs 1 sowie ein Produkt mit den Merkmalen des Anspruchs 6. Vorteilhafte Ausgestaltungen und Weiterentwicklungen des Verfahrens sowie des Produktes sind Gegenstand der entsprechenden Unteransprüche.

Bei den Bemühungen zur Entwicklung einer Formhaut mit verbesserten haptischen und mechanischen Eigenschaften wurde gefunden, dass ausgehend von einem mit einem Treibmittel beladenen thermoplastischen Kunststoffpulver im Slush-Moulding-Verfahren unter Verwendung einer temperierbaren Galvanoform eine Formhaut mit einem integralen Dichteverlauf erhalten wird, wobei die Formhaut auf ihrer der Galvanoform zugewandten Sichtseite eine geschlossene Oberfläche aufweist und die Dichte der Formhaut mit wachsender Entfernung von der Sichtseite zur Rückseite hin abnimmt.

Dabei wird in einem ersten Verfahrensschritt ein Treibmittel in ein Pulver eines thermoplastischen Kunststoffes eingebracht. Dieses mit Treibmittel beladene Kunststoffpulver wird in die temperierbare Galvanoform gegeben, in der das Kunststoffpulver an der erwärmten Oberfläche der Galvanoform unter Ausbildung eines Kunststofffilmes aufgeschmolzen wird. Nach dem vollständigen Abscheiden des Kunststofffilms wird der Wärmeeintrag auf der Galvanoseite unterbrochen, während die der Galvanoform abgewandte Seite des Kunststofffilmes mit Hilfe einer Wärmequelle zusätzlich erwärmt wird. Bei diesem Verfahrensschritt werden die Temperaturen so eingestellt, dass ein Temperaturgefälle zwischen der der Galvanoform zugewandten Sichtseite und der Rückseite der Formhaut ausgebildet wird, wobei der Wärmeeintrag auf der Sichtseite der sich bildenden Formhaut geringer ist als auf ihrer Rückseite.

Mit Hilfe der temperierbaren Galvanoform wird nur so viel Wärme eingebracht, dass beim Aufschmelzen des Kunststoffpulvers eine dünne kompakte Kunststoffschicht entsteht, ohne dass es dabei zu einem Freisetzen des Treibmittels kommt. Erst beim Erwärmen der Rückseite mit einer zusätzlichen Wärmequelle wird genügend Wärme eingebracht, um ein Aufschäumen des angesinterten Pulvers zu ermöglichen. Da gleichzeitig der Wärmeeintrag auf der Galvanoseite unterbrochen wird, erhält man aufgrund der thermischen Isolierung durch den Kunststoff selber ein Temperaturgefälle, wobei der Grad des Aufschäumens über den Wärmeeintrag gesteuert wird. Auf diese Weise wird eine Formhaut mit einem integralen Dichteverlauf erhalten, die auf ihrer der Galvanoform zugewandten Sichtseite eine geschlossene Oberfläche aufweist, während ihre Dichte mit wachsender Entfernung von der Sichtseite zur Rückseite hin nahezu linear abnimmt.

Für das erfindungsgemäße Verfahren können wahlweise chemische oder physikalische Treibmittel eingesetzt werden. Unter chemischen Treibmitteln versteht man Verbindungen, die durch Reaktion mit einer im Kunststoffpulver vorliegenden Komponente gasförmige Produkte bilden. Physikalische Treibmittel sind Verbindungen, die in den Einsatzstoffen zur Herstellung des Kunststoffpulvers gelöst oder emulgiert sind und unter den Bedingungen der Polymerisation freigesetzt werden. Dabei kann es sich beispielsweise um Kohlenwasserstoffe, halogenierte Kohlenwasserstoffe oder auch Gase, wie z. B. Kohlendioxid handeln.

Als Ausgangsmaterialien für das Kunststoffpulver werden thermoplastische Kunststoffe eingesetzt, die gemäß einer vorteilhaften Ausgestaltung der vorliegenden Erfindung ausgewählt sind, aus der Gruppe Polyurethan (PU), Polypropylen (PP), Polyvinylchlorid (PVC), Polyethylen (PE) oder Polyamid (PA).

Für die Erwärmung der Rückseite der Formhaut und Aktivierung des Treibmittels kann jede geeignete Wärmequelle eingesetzt werden, die in der Lage ist, genügend Wärme in den Kunststoff einzubringen, damit es zu einem Freisetzen des Treibmittels und zu einem Aufschäumen des Kunststoffes kommt. Gemäß einer vorteilhaften Ausgestaltung des erfindungsgemäßen Verfahrens werden Infrarotstrahler als Wärmequelle eingesetzt.

Ein besonderer Vorteil des erfindungsgemäßen Verfahrens besteht darin, dass die Eigenschaften des gewünschten Produktes über einen weiten Bereich gezielt eingestellt und dem jeweiligen Verwendungszweck angepasst werden können. So kann der Grad des Aufschäumens auf einfache Weise über den Wärmeeintrag durch die Wärmequelle gesteuert werden. Durch einen hohen Wärmeeintrag kann ein Dichteabfall von der Sichtseite zur Rückseite hin von mehr als 50% erreicht werden. Eine höhere Reduktion der Dichte als 50% ist technisch problemlos machbar, ist jedoch für die Herstellung von Formhäuten zur Herstellung von Innenverkleidungsbauteilen für Kraftfahrzeuge wenig sinnvoll, da sich die mechanischen Eigenschaften der Formhäute bei zu geringer Dichte verschlechtern. Somit sieht eine vorteilhafte Ausgestaltung des vorliegenden Verfahrens vor, dass die Dichte der Formhaut von der Sichtseite zur Rückseite hin zwischen ca. 10% und ca. 50% abnimmt. Bei einem für das erfindungsgemäße Verfahren typischen Dichteverlauf besitzt die Formhaut auf ihrer Sichtseite eine Dichte von ca. 1.0 - 1.2 g/cm³, die sich dann auf ca. 0.5 - 0.8 g/cm³ verringert.

Nach dem erfindungsgemäßen Verfahren kann das Gewicht der Formhaut über den Grad des Aufschäumens gesteuert werden, was angesichts der Forderung der Automobilindustrie nach Leichtbauweisen und Gewichtsreduzierung ein nicht zu unterschätzender Vorteil gegenüber dem Stand der Technik bedeutet. Trotz der Gewichtseinsparung können die mechanischen Eigenschaften aufgrund des integralen Aufbaus der erfindungsgemäßen Formhaut erhalten bleiben, so dass eine erfindungsgemäße Formhaut auch problemlos in Airbag-Bereichen eingesetzt werden kann.

Über den Grad des Aufschäumens und der daraus resultierenden Porosität ist auch die Eindruckhärte steuerbar, so dass neben dem Gewicht auch die Haptik gezielt eingestellt und optimiert werden kann. Da aufgrund des integralen Aufbaus der erfindungsgemäßen Formhaut die Oberfläche der Sichtseite weiterhin geschlossen ist, bleibt die gewünschte Optik erhalten.

Je nach Prozessführung kann die Rückseite der erfindungsgemäßen Formhaut offenzellig oder geschlossen erhalten werden. Eine zumindestens weitgehend geschlossene Oberfläche der Rückseite der Formhaut erhält man, wenn der Prozess des Aufschäumens frühzeitig abgebrochen wird, bevor die Porenbildung soweit fortgeschritten ist, dass die Rückseite der Formhaut aufreißt. Gemäß einer vorteilhaften Ausgestaltung der vorliegenden Erfindung wird die Rückseite gezielt porös ausgebildet, da auf diese Weise bei den Folgeprozessen, bei denen die Formhaut in der Regel durch Hinterschäumen mit einem Träger verbunden wird, die Schaumhaftung verbessert werden kann, womit die Stabilität des gesamten Innenverkleidungsbauteils verbessert wird.

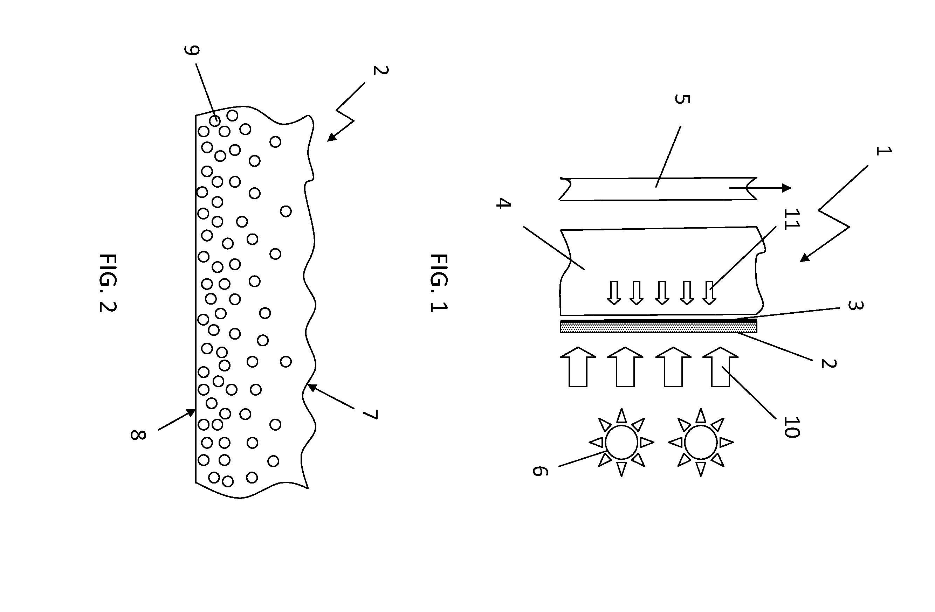

Im Folgenden wird die vorliegende Erfindung anhand von Zeichnungen zusätzlich erläutert. Dabei zeigt die Figur 1 eine schematische Darstellung des Verfahrens anhand eines Schnittes durch eine Galvanoform und Figur 2 eine stark vergrößerte Darstellung eines Schnittes einer Formhaut.

Die Figur 1 zeigt in einer schematischen Darstellung einen Schnitt durch ein kleinen Ausschnitt einer Galvanoform 1 mit einer mit Thermoöl beheizbaren Rückwand 4, einer Galvanoschale 3, auf der eine Formhaut 2 abgeschieden ist, und einen Ölkreislauf 5. Der in der Figur 1 gezeigte Zustand entspricht dem Verfahrensschritt e) aus Anspruch 1, bei dem der abgeschiedene Kunststofffilm auf der der Galvanoform 1 abgewandten Seite mit Hilfe einer Wärmequelle 6 erwärmt wird. Dabei sind die Temperaturen so eingestellt, dass ein Temperaturgefälle zwischen der der Galvanoform 1 zugewandten Sichtseite 7 und der Rückseite 8 der Formhaut 2 ausgebildet wird, wobei der Wärmeeintrag 11 auf der Sichtseite 7 der sich bildenden Formhaut 2 geringer ist als auf ihrer Rückseite 8, was durch die entsprechende Dimensionierung der Pfeile 10 und 11 ausgedrückt wird, die den Wärmeeintrag symbolisieren. Der Wärmeeintrag 11 auf der Galvanoseite ist zu diesem Zeitpunkt des Verfahrens bereits unterbrochen. Bei einer vorteilhaften Ausgestaltung der vorliegenden Erfindung können als Wärmequelle 6 beispielsweise Infrarotstrahler eingesetzt werden.

Die Figur 2 zeigt als Schnitt in einer stark vergrößerten Darstellung einen Ausschnitt der fertigen Formhaut 2. Dabei ist zu erkennen, dass die Formhaut 2 einen integralen Dichteverlauf aufweist, wobei die Formhaut 2 auf ihrer Sichtseite 7 eine geschlossene Oberfläche aufweist und ihre Dichte mit wachsender Entfernung von der Sichtseite 7 zur Rückseite 8 hin abnimmt. Diese Dichteabnahme ist nahezu linear, wobei die Dichte der Formhaut 2 von der Sichtseite 7 zur Rückseite 8 hin mehr als 50% abnehmen kann, was durch einen entsprechenden Wärmeeintrag gesteuert werden kann. Im vorliegenden Fall ist eine ca. 50%ige Dichteabnahme dargestellt. Die Rückseite 8 weist eine geschlossene Oberfläche auf. Hierzu ist anzumerken, dass durch einen entsprechenden Temperaturverlauf bei der Herstellung auch eine offenporige Rückseite erhalten werden kann, was sich gegebenenfalls als vorteilhaft für die spätere Verarbeitung der Formhaut 2 erweisen kann. Die geschlossene Sichtseite 7 zeigt bei der vorliegenden Darstellung eine Narbenstruktur, die häufig insbesondere für Instrumententafeln gewählt wird.

### Bezugszeichenliste

- 1: Galvanoform
- 2: Formhaut
- 3: Galvanoschale
- 4: Galvanorückwand mit Thermoöl
- 5: Ölkreislauf
- 6: Wärmequelle
- 7: Sichtseite
- 8: Rückseite
- 9: Mikropore
- 10: Wärmeeintrag
- 11: Wärmeeintrag

## Patentansprüche

1. Verfahren zur Herstellung einer eine Sichtseite (7) und eine Rückseite (8) aufweisenden Formhaut (2) im Slush-Moulding-Verfahren unter Verwendung einer temperierbaren Galvanoform (1) mit den Verfahrensschritten:
a) Einbringen eines Treibmittels in ein Pulver eines thermoplastischen Kunststoffes;
b) Eintragen des Kunststoffpulvers in die temperierbare Galvanoform (1);
c) Aufschmelzen des Kunststoffpulvers an der erwärmten Oberfläche der Galvanoform (1) unter Ausbildung eines Kunststofffilmes, wobei die Temperatur der Galvanoform (1) so eingestellt wird, dass kein Freisetzen des Treibmittels erfolgt;
d) Unterbrechen des Wärmeeintrags auf der Galvanoseite und
e) Erwärmen der der Galvanoform (1) abgewandten Seite des Kunststofffilmes mit Hilfe einer Wärmequelle (6),
**dadurch gekennzeichnet, dass** die Temperaturen in Schritt e) so eingestellt werden, dass ein Temperaturgefälle zwischen der der Galvanoform (1) zugewandten Sichtseite (7) und der Rückseite (8) der Formhaut (2) ausgebildet wird, wobei der Wärmeeintrag (11) auf der Sichtseite (7) der sich bildenden Formhaut (2) geringer ist als auf ihrer Rückseite (8) und der Wärmeeintrag (10) auf der Rückseite (8) ausreicht, um ein Freisetzen des Treibmittels zu bewirken.

2. Verfahren nach Anspruch 1,
**dadurch gekennzeichnet, dass** als Treibmittel ein chemisches Treibmittel eingesetzt wird.

3. Verfahren nach Anspruch 1,
**dadurch gekennzeichnet, dass** als Treibmittel ein physikalisches Treibmittel eingesetzt wird.

4. Verfahren nach einem der Ansprüche 1 bis 3,
**dadurch gekennzeichnet, dass** die Erwärmung der der Galvanoform (1) abgewandten Seite des Kunststofffilmes mit Hilfe von Infrarotstrahlern (6) erfolgt.

5. Verfahren nach einem der Ansprüche 1 bis 4,
**dadurch gekennzeichnet, dass** als Ausgangsmaterial für das Kunststoffpulver ein thermoplastischer Kunststoff ausgewählt aus der Gruppe Polyurethan (PU), Polypropylen (PP), Polyvinylchlorid (PVC), Polyethylen (PE) oder Polyamid (PA) eingesetzt wird.

6. Formhaut (2) auf Basis eines im Slush-Moulding-Verfahren in einer Galvanoform (1) verarbeiteten Kunststoffes,
**dadurch gekennzeichnet, dass** die Formhaut (2) einen integralen Dichteverlauf aufweist, wobei die Formhaut (2) auf ihrer der Galvanoform (1) zugewandten Sichtseite (7) eine geschlossene Oberfläche aufweist und ihre Dichte mit wachsender Entfernung von der Sichtseite (7) zur Rückseite (8) hin abnimmt.

7. Formhaut (2) nach Anspruch 6,
**dadurch gekennzeichnet, dass** die Formhaut (2) von der Sichtseite (7) zur Rückseite (8) eine zunehmende Mikroporosität aufweist.

8. Formhaut (2) nach Anspruch 6 oder 7,
**dadurch gekennzeichnet, dass** die Dichte der Formhaut (2) von der Sichtseite (7) zur Rückseite (8) hin nahezu linear abnimmt.

9. Formhaut (2) nach einem der Ansprüche 6 bis 8,
**dadurch gekennzeichnet, dass** die Dichte der Formhaut (2) von der Sichtseite (7) zur Rückseite (8) hin zwischen ca. 10 und ca. 50 % abnimmt.

10. Formhaut (2) nach einem der Ansprüche 6 bis 9,
**dadurch gekennzeichnet, dass** die Formhaut (2) auf ihrer Rückseite (8) eine offenzellige Oberfläche aufweist.

11. Formhaut (2) nach einem der Ansprüche 6 bis 9,
**dadurch gekennzeichnet, dass** die Formhaut (2) auf ihrer Rückseite (8) eine geschlossene Oberfläche aufweist.
